# EUROPÄISCHE PATENTANMELDUNG

(11) **EP 1 854 530 A1**
(43) Veröffentlichungstag der Anmeldung: **14.11.2007**
(21) Anmeldenummer: 06009605.4
(22) Anmeldetag: 10.05.2006
(51) Int. Cl.: B01D 63/16, B01D 33/21, B01D 33/23, B01D 33/54, B01D 65/04, B01D 33/46

(54) **Rotationsfilter mit zentraler Feedzuführung und Filterplatten hierfür**

(71) Anmelder: Grundfos Management A/S, 8850 Bjerringbro (DK)
(72) Erfinder: Beldring, Finn, 2830 Virum (DK); Rasmussen, Christian, Hammershoj 8830 Tjele (DK)
(74) Vertreter: Vollmann, Heiko

(57) **Zusammenfassung**

Die Filtervorrichtung weist einen in einem Gehäuse rotierbar angeordneten Filterplattenstapel (1) auf, der aus hohlen Filterplatten (2) gebildet ist und bei dem die gefilterte Flüssigkeit nach Durchströmen der Filterplatten (2) zentral abgeführt wird. Die Zufuhr der ungefilterten Flüssigkeit erfolgt ebenfalls zentral, und zwar durch zentrumsnahe Durchbrechungen (15), die so angeordnet und ausgebildet sind, dass die Filterplatten eine Kreiselpumpwirkung erzeugen.

## Beschreibung

Die Erfindung betrifft eine Filtervorrichtung mit den im Oberbegriff des Anspruchs 1 angegebenen Merkmalen, sowie eine Filterplatte für eine solche Filtervorrichtung gemäß den im Oberbegriff des Anspruchs 13 angegebenen Merkmalen.

Bekannte Filtervorrichtungen der vorgenannten Art bestehen typischerweise aus Stapeln von hohlen Filterplatten, die in einem im Wesentlichen zylindrischen Filtergehäuse ggf. auch rotierend angeordnet sind. Die zu filternde Flüssigkeit wird in das Gehäuse eingeleitet, gelangt durch die im Bereich der Oberfläche der Filterplatten gebildeten Filter in das Innere der Platten und von dort in einen zentralen Kanal, über welchen die gefilterte Flüssigkeit abgezogen wird. Derartige Filterplatten sind beispielsweise aus DE 196 24 176 A1 oder EP 0 723 791 bekannt, entsprechende Filtervorrichtungen sind aus DE 196 24 176 A1 sowie aus US-PS-5,326,512 bekannt.

Nachteilig bei bekannten Filtervorrichtungen ist, dass die Filterplatten nicht gleichmäßig mit der zu filternden Flüssigkeit beaufschlagt werden und dass sie sich im Laufe der Zeit zusetzen, wenn nicht geeignete Maßnahmen getroffen werden.

Aus DE 196 24 176 A1 ist es bereits bekannt, die Filterplatte an ihrer Oberfläche derart zu profilieren, dass bei Rotation des Filterplattenstapels eine gewisse radiale Pumpwirkung erzeugt wird, welche für einen Flüssigkeitsaustausch an der Filteroberfläche, insbesondere zur Entfernung von Rückständen auf der Filterfläche sorgen soll. Nachteilig bei der bekannten Filterplattenanordnung ist allerdings, dass auch bei Rotation des Filterplattenstapels sich keine geeignete Strömung einstellt, um dies wirksam zu erreichen.

Vor diesem Hintergrund liegt der Erfindung die Aufgabe zugrunde, eine gattungsgemäße Filtervorrichtung so auszubilden, dass eine intensive Durchströmung des Filterplattenstapels und damit eine möglichst gleichmäßige Filterwirkung erzielt werden kann. Weiterhin soll eine Filterplatte für eine solche verbesserte Filtervorrichtung geschaffen werden.

Diese Aufgabe wird gemäß der Erfindung durch die in Anspruch 1 angegebenen Merkmale gelöst. Eine entsprechende Filterplatte wird gemäß der Erfindung durch die in Anspruch 13 angegebenen Merkmale gekennzeichnet. Vorteilhafte Ausgestaltungen der Filtervorrichtung sowie der Filterplatte ergeben sich aus den Unteransprüchen der nachfolgenden Beschreibung und der Zeichnung.

Die erfindungsgemäße Filtervorrichtung weist in an sich bekannter Weise einen in einem Gehäuse rotierbar angeordneten Filterplattenstapel auf, bei dem die gefilterte Flüssigkeit nach Durchströmen der Filterplatten zentral abgeführt wird. Gemäß der Erfindung erfolgt nicht nur die Abfuhr des Filtrats, sondern auch die Zufuhr der ungefilterten Flüssigkeit ebenfalls zentral durch den Filterplattenstapel.

Grundgedanke der vorliegenden Erfindung ist es, die zu filternde Flüssigkeit zentral durch den Filterplattenstapel zuzuführen sowie durch einen zentralen Kanal ebenfalls abzuführen. Dadurch, dass der Filterplattenstapel rotierbar ist, erfolgt bei Rotation eine Pumpwirkung der Gestalt, dass die zu filternde Flüssigkeit zentral durch den Filterplattenstapel angesaugt und zwischen den Filterplatten nach außen geleitet wird, wodurch die Filterplatten gleichmäßig mit der zu filternden Flüssigkeit beaufschlagt werden, die auf ihrem Weg längs der Plattenoberfläche gefiltert wird, wobei die gefilterte Flüssigkeit im Filterplatteninneren verbleibt und über die z.B. zentrale Welle abgezogen wird. Die verbleibende ungefilterte Masse wird durch die Pumpwirkung radial nach außen geleitet, wo sie abgeführt, im Kreislauf geführt oder in anderer geeigneter Weise behandelt wird.

Gemäß der Erfindung erfolgt die Zufuhr der ungefilterten Flüssigkeit zentral, bevorzugt zentral durch den Filterplattenstapel hindurch, da dies eine besonders gute Verteilung der Flüssigkeit innerhalb der Filtervomchtung gewährleistet und darüber hinaus durch geeignete, weiter unten noch im Einzelnen beschriebene konstruktive Ausbildungen der Filterplatten auf konstruktiv einfache Weise realisiert werden kann.

Bei bekannten Filtervorrichtungen wird der Filterplattenstapel vergleichsweise langsam rotiert, so auch in dem aus DE 196 24 176 A1 bekannten, bei welchem die Rotation des Filterplattenstapels im Wesentlichen zur Entfernung des sich darauf absetzenden Filterkuchens dient. Insoweit günstiger ist die erfindungsgemäße Vorrichtung, welche einen Antrieb vorsieht, der den Filterplattenstapel mit einer Drehzahl rotiert, welche am Außenumfang eine Relativgeschwindigkeit zum Gehäuse von mindestens 3m/se bewirkt. Eine solche vergleichsweise schnelle Rotation des Filterplattenstapels erzeugt eine Pumpwirkung, welche einen intensiven Flüssigkeitstransport innerhalb der Filtervorrichtung und nicht nur radial zu den Filterplatten bewirkt.

Gemäß einer Weiterbildung der erfindungsgemäßen Vorrichtung ist der Filterplattenstapel aus mehreren mit Abstand nebeneinander angeordneten und rotierend angetriebenen Filterplatten aufgebaut, die jeweils eine mindestens abschnittsweise fluiddurchlässige Schicht aufweisen und deren Inneres mit mindestens einem Anschluss vorzugsweise zur Fluidab- oder ggf. auch zur Fluidzufuhr fluidleitend verbunden ist. Darüber hinaus weisen die Filterplatten jeweils mindestens eine diese durchsetzende Ausnehmung zur Fluidzufuhr auf, die benachbart zum Anschluss angeordnet und fluidisch von diesem getrennt ist. Diese Anordnung führt nicht nur zu einer intensiven Flüssigkeitsumwälzung innerhalb der Filtervorrichtung, sondern auch zu einer kompakten Bauform, da sowohl der Kanal für die Fluidzufuhr als auch der für die Fluidabfuhr durch die Filterscheiben selbst gebildet wird, was konstruktiv günstig ist, da unterschiedlich hohe Filterplattenstapel aus gleichen Filterplatten hergestellt werden können, ohne diese konstruktiv verändern zu müssen. Dabei ist lediglich einer dieser Kanalführungen abzudichten, zweckmäßigerweise der das Filtrat führende Kanal wohingegen der andere Kanal in einfacher Weise durch Durchbrechungen oder Ausnehmungen in den Filterplatten und im Übrigen offen ausgebildet sein kann.

Bevorzugt weisen die Filterplatten der Filtervorrichtung im Inneren nicht nur Anschlüsse zur Abfuhr der gereinigten Flüssigkeit, sondern darüber hinaus auch Anschlüsse zur Zufuhr mindestens eines Fluids auf, so dass die Filterplatten neben der rein mechanischen Filterwirkung auch zusätzlich oder ergänzend mit chemischen Zusätzen beaufschlagt werden können. Diese Anschlüsse liegen vorteilhaft innerhalb des zentralen Abfuhranschlusses und bilden durch die zueinander fluchtenden Anschlüsse des Filterplattenstapels Kanäle.

Gemäß einer vorteilhaften Weiterbildung der Erfindung können die Filterplatten der Filtervorrichtung auch jeweils mindestens eine elektrisch leitende Schicht aufweisen, um eine physikalische Behandlung durch Strom zu ermöglichen. Hierzu sind Kontaktierungsmittel zum Anlegen einer elektrischen Spannung zwischen benachbarte Filterplatten oder zwischen zwei Seiten derselben Filterplatte vorzusehen, was durch entsprechende Leiterausbildungen zentral oder am Außenumfang realisiert werden kann. Alternativ können die elektrisch leitenden Schichten miteinander elektrisch leitend verbunden und lediglich gegenüber einem externen Leiter ein Potential aufweisen, beispielsweise einer im Bereich der Gehäusewand angeordneten Elektrode.

Bei der erfindungsgemäßen Filtervorrichtung dient die Rotation des Filterplattenstapels im Wesentlichen der Umwälzung der zu filternden Flüssigkeit und zum Entfernen des sich ggf. auf den Filterflächen ablagernden Filterkuchens oder anderer Substanzen. Gemäß einer Weiterführung der Erfindung ist vorgesehen, dass zwischen benachbarten Filterplatten Abstreifelemente angeordnet sind, welche gegenüberliegende Filterflächen beaufschlagen. Diese Abstreifelemente können zweckmäßigerweise gehäusefest gelagert, bevorzugt um eine Achse schwenkbar gelagert sein, so dass sie je nach Drehrichtung des Filterplattenstapels vorzugsweise selbsttätig in diesen ein- oder auch ausschwenken.

Die kreiselpumpenähnliche Pumpwirkung der erfindungsgemäßen Filterplatten innerhalb der erfindungsgemäßen Filtervorrichtung kann noch dadurch gesteigert werden, dass zwischen benachbarten Filterplatten des rotierbar antreibbaren Plattenstapels eine Leiteinrichtung vorgesehen ist, die die Druckseite einer Filterplatte mit der Saugseite der in Strömungsrichtung dahinter angeordneten Filterplatte verbindet. Durch eine solche Anordnung kann nicht nur eine im Wesentlichen radiale, sondern auch eine axiale Durchströmung des Filterstapels erfolgen, und zwar nach dem Prinzip einer mehrstufigen Pumpe, bei der die Druckseite einer vorangehenden Pumpenstufe mit der Saugseite der nachfolgenden Pumpenstufe verbunden ist. Die Druckseite einer Filterplatte befindet sich am Außenumfang, wohingegen die Saugseite durch die zentrale Durchbrechung oder Ausnehmung gebildet ist, nach Art eines Saugmundes eines Kreiselpumpenrades.

Die Leiteinrichtung gemäß der Erfindung besteht vorteilhaft aus zwei gehäusefest angeordneten Platten, von denen in Strömungsrichtung gesehen die erste Platte einen wellenfernen Strömungskanal und in Strömungsrichtung gesehen die zweite Platte einen wellennahen Strömungskanal aufweist oder bildet, so dass die Flüssigkeit, nachdem sie sich vom Außenumfang einer Filterplatte aufgrund der Rotationswirkung gelöst hat, zwischen die feststehenden Platten geleitet wird, so dass sie ihre Richtung um 180° ändert, um dann im Bereich des wellennahen Strömungskanals der in Strömungsrichtung nachfolgenden Filterplatte zentral zugeführt wird. Vorteilhaft sind auch die feststehenden Platten der Leiteinrichtung als Filterplatten ausgebildet und vorzugsweise an einen außenseitig der Platten vorgesehenen Abfuhrkanal angeschlossen, über den das dort gewonnene Filtrat abgeführt wird. Dabei können bevorzugt die Platten als hohle Filterplatten ausgebildet sein oder auch lediglich eine Filteranordnung aufweisen, wenn dahinter eine geeignete Filtratabfuhr vorgesehen ist.

Um den Filterprozess, insbesondere auch mögliche chemische Reaktionen im Bereich der Filtervorrichtung präzise steuern zu können, ist gemäß einer Weiterbildung der Erfindung innerhalb des rotierbar angeordneten Plattenstapels mindestens ein Heizelement vorgesehen, mit dem dieser beheizt werden kann.

Eine Filterplatte für eine solche Filtervorrichtung ist gemäß der Erfindung durch mindestens eine abschnittsweise fluiddurchlässige Schicht gebildet, wobei das Innere der Filterplatte mit mindestens einem zentralen Anschluss fluidleitend verbunden ist und benachbart zum zentralen Anschluss mindestens eine die Filterplatte durchsetzende Ausnehmung vorgesehen ist, die mit dem Inneren der Filterplatte nicht leitungsverbunden ist. Die erfindungsgemäße Filterplattenkonstruktion ermöglicht insbesondere im Einsatz zu Plattenstapeln einerseits die Schaffung eines zentralen Abfuhrkanals für die Filtratabfuhr und andererseits eines offenen Kanals, welcher durch die die Filterplatten durchsetzenden Ausnehmungen gebildet ist, der jedoch mit dem Inneren der Filterplatte nicht leitungsverbunden ist, so dass sichergestellt ist, dass das Filtrat stets die fluiddurchlässige Schicht durchlaufen muss, bevor es in den zentralen Abfuhrkanal gelangt.

Bevorzugt ist dabei die zumindest eine die Filterplatte durchsetzende Ausnehmung konzentrisch zur zentralen Öffnung angeordnet. Dies hat den Vorteil, dass auch bei höheren Drehzahlen kein Unwuchtproblem auftritt und zum anderen eine gute Saugwirkung in diesen Bereich entsteht.

Gemäß einer Weiterbildung der Erfindung können innerhalb der Filterplatte Kanäle vorgesehen sein, die jeweils mit mindestens einem Anschluss leitungsverbunden sind und die mit unterschiedlichem radialem Abstand enden. Auf diese Weise kann an unterschiedlichen Radien der Platte Fluid zu- oder auch abgeführt werden. Bei geeigneter Ausbildung der Anschlüsse können beim Aufbau von Filterplattenstapeln neben der zentralen Hohlwelle weitere Leitungen in dieser Welle gebildet sein, die jeweils zu den jeweiligen Anschlüssen auf vorzugsweise gleichem radialem Niveau führen.

Es zählt zum Stand der Technik, bei derartigen Filterplatten sowohl den Antrieb als auch die Filtratabfuhr durch eine zentrale Welle erfolgen zu lassen, die aus im Wesentlichen zylindrischen Abschnitten der einzelnen Filterplatten gebildet ist. Um bei dieser an sich vorteilhaften Konstruktion auch eine möglichst zentrale Flüssigkeitszufuhr zu gewährleisten, andererseits jedoch keine Unwucht zu erzeugen und schließlich die Leitungswege zwischen gefilterter und ungefilterter Flüssigkeit zuverlässig zu trennen ist gemäß einer Weiterbildung der Erfindung vorgesehen, dass eine Verbindung zwischen der eigentlichen Filterplatte und dem hohlzylindrischen Bauteil über kanalbildende, in dem hohlzylindrischen Bauteil sowie im Inneren der Filterplatte mündende hohle Speichen vorzusehen, welche zum einen die mechanische Verbindung zwischen dem hohlzylindrischen Bauteil und der Filterplatte zur Übertragung des Drehmomentes bilden und zum anderen die Kanalverbindung vom Inneren der Platte zu der durch die hohlzylindrischen Bauteile gebildeten Hohlwelle zu bilden.

Um das zur Rotation erforderliche Drehmoment zu übertragen ist es zweckmäßig, jedes der hohlzylindrischen Bauteile mit Formschlussmitteln zu versehen, so dass beim Aufbau eines Filterplattenstapels die einzelnen Filterplatten drehfest zueinander angeordnet sind. Bei einer solchen Ausbildung können unterschiedlich hohe Filterplattenstapel gebildet werden, ohne dass unterschiedliche Bauteile hierfür erforderlich sind.

Um die Pumpwirkung der erfindungsgemäßen Filterplatte zu erhöhen ist gemäß einer Weiterbildung der Erfindung vorgesehen, an einer Flachseite Schaufeln anzuordnen, welche sich vorzugsweise von einem inneren Durchmesser zu einem äußeren Durchmesser radial und tangential zur Mittelachse der Filterplatte erstrecken, ähnlich den Schaufeln eines Kreiselpumpenrades.

Besonders vorteilhaft erstrecken sich dabei die Schaufeln mit ihren Flachseiten normal, d.h. senkrecht zur Flachseite der Filterplatte. Hierdurch wird eine besonders starke Strömungsführung erzielt, die noch unterstützt wird, wenn die Schaufeln über ihre gesamte Länge eine konstante Breite aufweisen.

Die erfindungsgemäßen Filterplatten werden typischerweise zu mehreren konzentrisch nebeneinander liegenden Platten gestapelt und in einem Filtergehäuse angeordnet, wobei die hohlzylindrischen Bauteile eine Welle zur Rotation des Filterplattenstapels sowie einen zentralen Kanal zur Abfuhr von typischerweise Filtrat bilden.

Mit wachsender Größe eines Filterplattenstapels wächst auch das Drehmoment, das zu dessen Antrieb erforderlich ist. Da bei ausschließlich formschlüssiger Kraftübertragung durch die hohlzylindrischen Bauteile in den Filterplatten diese dann vergleichsweise stabil und schwer ausgestaltet werden müssen, kann es insbesondere bei größeren Konstruktionen zweckmäßig sein, eine zentrale Welle vorzusehen, auf welcher die Filterplatten aufgesteckt sind. Dann ist es zweckmäßig, dass die hohlzylindrischen Bauteile an ihrer Innenseite mit Elementen zum Zentrieren auf der Welle vorgesehen sind, damit Unwuchten vermieden werden und ein möglichst gleichmäßiger und rundlaufender Filterplattenstapel geschaffen wird.

Die eingangs erwähnten Abstreifelemente zwischen benachbarten Filterplatten können gemäß einer Weiterbildung der Erfindung auch an der Filterplatte selbst angebracht, insbesondere schwenkbar angelenkt sein. Dann weist vorteilhaft jede Filterplatte an nur einer Seite ein solches Abstreifelement auf, welches mit der Plattenoberfläche derselben sowie auch der gegenüberliegenden Filterplatte im Stapel in Wirkverbindung steht. Auch bei Anbringung des Abstreifelements an einer Flachseite der Platte kann bei geeigneter Anordnung und Lagerung parallel zur Drehachse der Platte dieses selbsttätig ein- bzw. ausschwenkend sein, so dass beispielsweise bei der normalen Drehrichtung des Plattenstapels im normalen Filterbetrieb es als Abstreifelement wirksam und in entgegengesetzter Drehrichtung der Platte unwirksam ist. So können allein durch Richtungsumkehr des Antriebs die Abstreifelemente in oder außer Betrieb gesetzt werden.

Gemäß einer Weiterbildung der Erfindung kann die Reinigung der Plattenoberfläche auch dadurch bewirkt werden, dass eine vorbestimmte Unwucht in der Filterplatte vorgesehen ist, die in einem vorbestimmten Drehzahlbereich radial und/oder axiale Schwingungen der Filteroberfläche hervorruft, bei welcher sich der Filterkuchen löst und mit der Strömung entfernt werden kann.

Vorteilhaft sind mindestens die außenliegenden Flachseiten der Filterplatte mit einer verschleißmindernden Schicht versehen, welche die Lebensdauer im normalen Betrieb erhöht. Eine solche verschleißmindernde Schicht kann darüber hinaus elektrisch leitend sein, es kann jedoch auch alternativ oder gesondert eine elektrisch leitende Schicht an der Filterplatte vorgesehen sein. Zur biologischen Behandlung von Flüssigkeiten kann es darüber hinaus zweckmäßig sein, eine biologisches Wachstum fördernde Schicht an der Filterplatte vorzusehen.

Die Erfindung ist nachfolgend anhand eines in der Zeichnung dargestellten Ausführungsbeispiels näher erläutert. Es zeigen:
- Fig. 1: in perspektivischer Darstellung eine Filterplatte gemäß der Erfindung,
- Fig. 2: in Seitenansicht den Aufbau der Filterplatte nach Fig. 1,
- Fig. 3: in perspektivischer Explosionsdarstellung den Aufbau der Filterplatte gemäß Fig. 1,
- Fig.4: eine Draufsicht auf das zentrale Bauteil der Filterplatte gemäß Fig. 1,
- Fig. 5: eine Seitenansicht von drei zu einem Stapel angeordneten Filterplatten,
- Fig. 6: die Anordnung gemäß Fig. 5 in perspektivischer Darstellung,
- Fig. 7: in perspektivischer Darstellung drei zu einem Stapel angeordnete Filterplatten mit Schaufeln an einer Plattenseite,
- Fig. 8: die Anordnung eines Abstreifelements innerhalb einer Filtervorrichtung und
- Fig. 9: in stark vereinfachter schematischer Darstellung eine Filtervorrichtung.

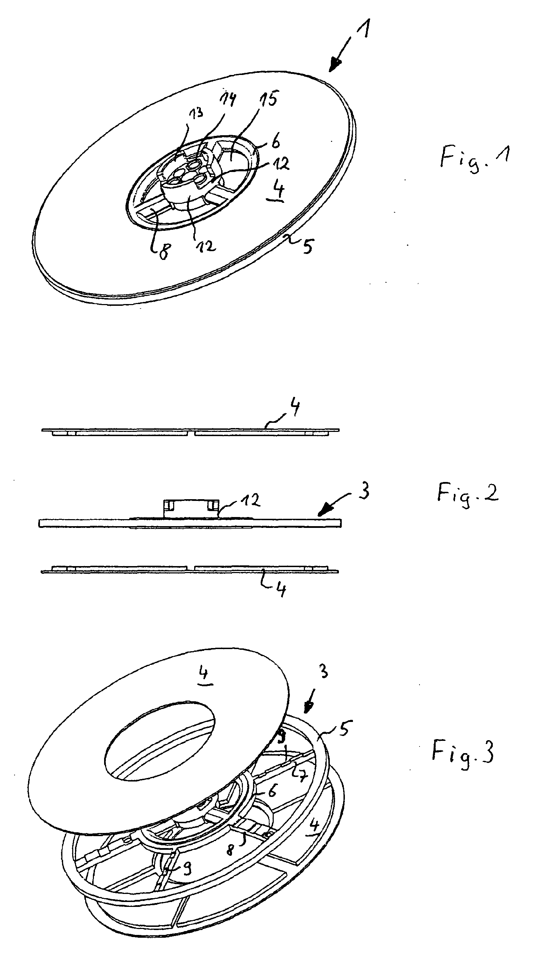

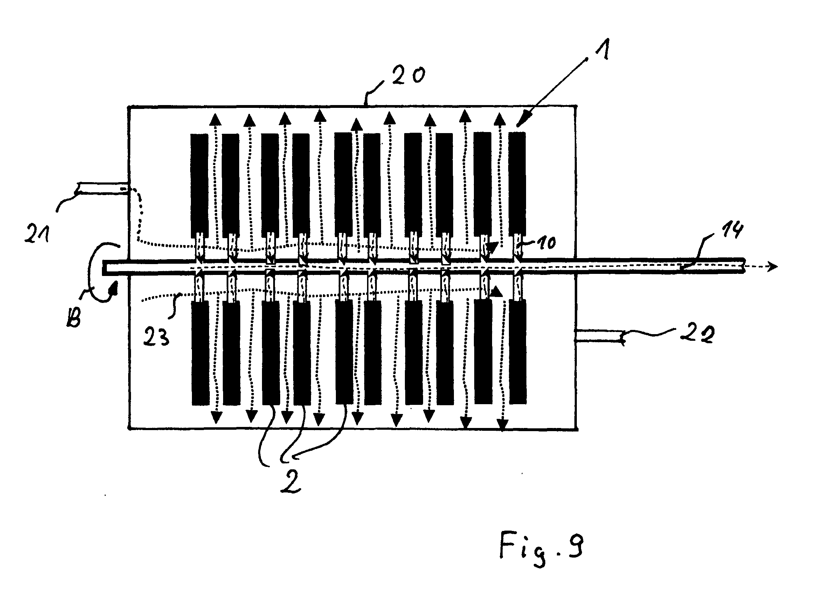

Die beispielhaft in Fig. 9 dargestellte Filtervorrichtung weist einen Filterplattenstapel 1 auf, der aus einer Vielzahl von konzentrisch zueinander angeordneter und zu einem Stapel aufeinander gesteckter Filterplatten 2 gebildet ist, deren Aufbau sich im Einzelnen aus den Figuren 1 bis 4 ergibt.

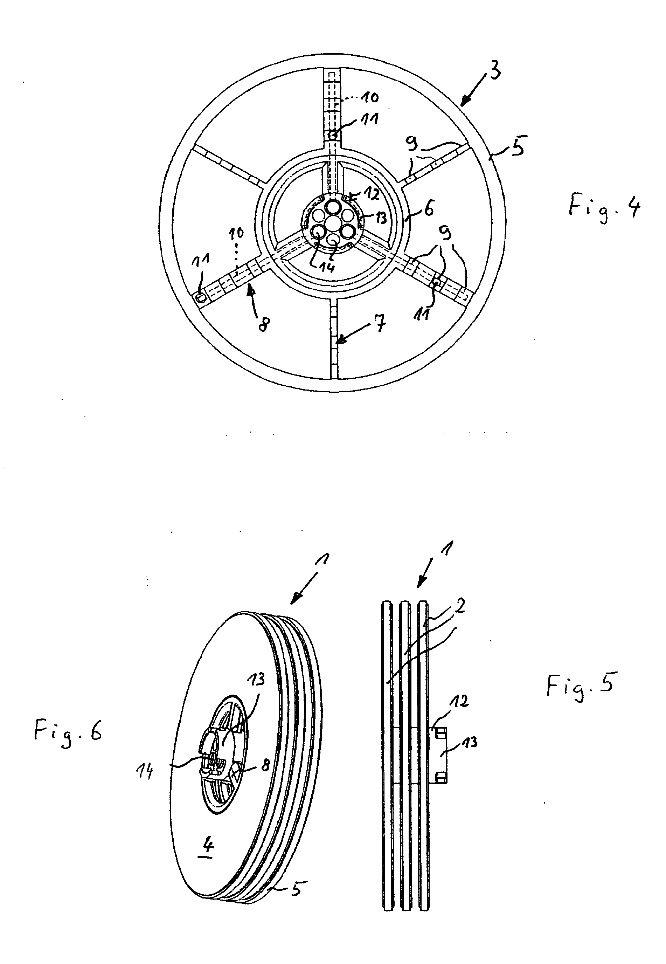

Jede Filterplatte 2 weist ein zentrales Bauteil 3 auf, das beispielsweise als Spritzgussteil aus Kunststoff ausgebildet sein kann und welches die tragende und kanalbildende Funktion der Filterplatte 2 darstellt. Der eigentliche Filter wird durch zwei ringförmige Filterscheiben 4 gebildet, die auf dem zentralen Bauteil 3 zu beiden Seiten angeordnet sind und zusammen mit diesen die Filterplatte 2 bilden. Das zentrale Bauteil 3 hat in Draufsicht (Fig. 4) eine kreisrunde Form und weist an seinem Außenumfang einen geschlossenen Außenring 5 auf, dessen Außenseite auch die Außenseite der Filterplatte 2 bildet. Mit radialem Abstand ist innerhalb des Außenrings 5 ein Innenring 6 angeordnet, der über drei über 120° verteilt angeordnete Tragrippen 7 mit dem Außenring 5 verbunden ist. Jeweils um 60° versetzt zu den Tragrippen 7 sind drei leitungsführende Rippen 8 angeordnet, die in gleicher Weise wie die Tragrippen auf der zu den Filterscheiben 4 gerichteten Seiten Rücksprünge 9 aufweisen, welche die Flüssigkeitszirkulation innerhalb der durch die Filterscheiben 4 beidseitig abgedeckten zentralen Bauteils 3 gewährleistet. Durch diese Rücksprünge 9 ist ein Freiraum zwischen den ringförmigen Filterscheiben 4 und dem zentralen Bauteil 3 gebildet, auf dessen Rippen 7, 8 sowie Ringen 5, 6 die Filterscheiben 4 zu beiden Seiten aufliegen und gestützt sind.

Innerhalb der leitungsführenden Rippen 8 sind Kanäle 10 angeordnet, die auf unterschiedlichen Radien innerhalb der Filterplatte 2 münden. Die Kanalmündungen sind mit 11 gekennzeichnet.

Die leitungsführenden Rippen 8 verbinden nicht nur den Außenring 5 mit dem Innenring 6, sondern sind radial weiter nach Innen geführt bis zu einem zentralen im Wesentlichen zylindrischen Anschlussbauteil 12, mit dem die Rippen 8 endseitig fest verbunden sind und in welche die Kanäle 10 münden. Das Anschlussbauteil 12 ist außen abgestuft zylindrisch ausgebildet und weist Mitnehmer 13 auf, so dass Anschlussbauteile 12 benachbarter Filterplatten 2 derart ineinander gesteckt werden, dass die Mitnehmer 13 in dem Bereich zwischen benachbarten leitungsführenden Rippen 8 formschlüssig und dicht zur Anlage kommen. Durch diese Mitnehmer 13 in Verbindung mit den Rippen 8 sind die so miteinander verbundenen Filterplatten 2 drehfest miteinander verbunden, so dass ein Drehmoment zur Rotation des Filterstapels von einer zur anderen Platte 2 übertragen wird, ohne dass hierfür eine Welle erforderlich ist, die Anschlussbauteile 12 bilden somit eine Welle, die so ausgestaltet ist, dass sie auch flüssigkeitsdicht nach außen ist.

In einfachster Ausführung sind die Anschlussbauteile 12 als abgestufte Hohlzylinder ausgebildet, dann ist in einer daraus gebildeten Hohlwelle ein zentraler für die Abfuhr von Filtrat bestimmter Kanal gebildet. In der vorstehend darstellten Ausführungsvariante sind jedoch in dem Anschlussbauteil 12 insgesamt sieben Kanäle 14 vorgesehen, von denen drei im Bereich der dort mündenden leitungsführenden Rippen 8 angeordnet sind und somit für jede dieser Rippen 8 einen gesonderten Kanal 14 bilden, derart, dass bei entsprechend aus einer Vielzahl von Filterplatten 2 aufgebauten Filterplattenstapel 1 diese drei Kanäle unterschiedlichem radialem Niveau bezogen auf die Drehachse der Filterplatten zugeordnet sind. Es kann über diese Kanäle Filtrat abgezogen, oder über zumindest einen der Kanäle ein Zusatzstoff auf vorbestimmten radialen Niveau in die Filterplatten 2 eingebracht werden. Die auf diese Weise innerhalb der Anschlussbauteile 12 gebildeten Kanäle 14 sind sowohl nach außen als auch untereinander abgedichtet, so dass sie voneinander getrennte Leitungen bilden, die am Ende des Filterplattenstapels über ein entsprechend mitrotierendes (nicht dargestelltes) Abschlussbauteil angeschlossen sind.

In dem Bereich zwischen dem Innenring 6 und dem Anschlussbauteil 12 ist eine ringförmige, durch die leitungsführenden Rippen 8 durchsetze Durchbrechung 15 in der Filterplatte 2 gebildet.

In montiertem Zustand wird eine Filterplatte 2 durch ein zentrales Bauteil 3 gebildet, an welchem zu beiden Seiten Filterscheiben 4 angebracht sind, welche den Ringraum zwischen dem Innenring 6 und dem Außenring 5 nach außen hin abdecken. Derart gebildete Filterplatten 2 sind über ihre Anschlussbauteile 12 zu einem Filterplattenstapel ineinander gesteckt, wie dies anhand von Fig. 5 ersichtlich ist. Dabei ist das Anschlussbauteil 12 so ausgebildet, dass die Mitnehmer 13 einen Innenumfang aufweisen, welcher etwa dem Außenumfang des Anschlussbauteils 12 im Bereich der Rippen 8 entspricht, so dass Anschlussbauteile 2 ineinander gesteckt werden können, wodurch die eigentlichen Filterplatten parallel zueinander mit Abstand angeordnet sind und durch die Anschlussbauteile 12 über die dann zueinander fluchtenden Kanäle 14 Leitungen gebildet sind, die zueinander und zur Durchbrechung 15 abgedichtet sind. Ein so gebildeter Filterplattenstapel wird innerhalb der Filtervorrichtung rotierend angetrieben, wobei die Flüssigkeit über die Durchbrechungen 15 zugeführt wird und sich dann zwischen gegenüberliegender Filterscheiben 4 benachbarter Filterplatten 2 radial nach außen bewegt. Auf diesem Weg werden die Filterscheiben 4 flächig und unter Druck mit der zu filternden Flüssigkeit benetzt, die dabei zumindest teilweise die Filterscheiben 4 durchdringt und als gefilterte Flüssigkeit, also als Filtrat in das Innere der Filterplatten 2 gelangt. Über die Kanalmündungen 11 wird die im Inneren der Filterplatten 2 befindliche Flüssigkeit zum Anschlussbauteil 12 und von dort durch die durch die Kanäle 14 gebildeten Leitungen zentral aus dem Filterplattenstapel 1 abgeführt und dann aus der Vorrichtung geleitet. Die zwischen den Filterplatten 2 verbleibende und nicht die Filterscheiben 4 passierende Masse wird mit dem durch die Durchbrechungen 15 angesaugten und radial nach außen geführten Förderstrom abgeführt und aus dem Filterplattenstapel entfernt.

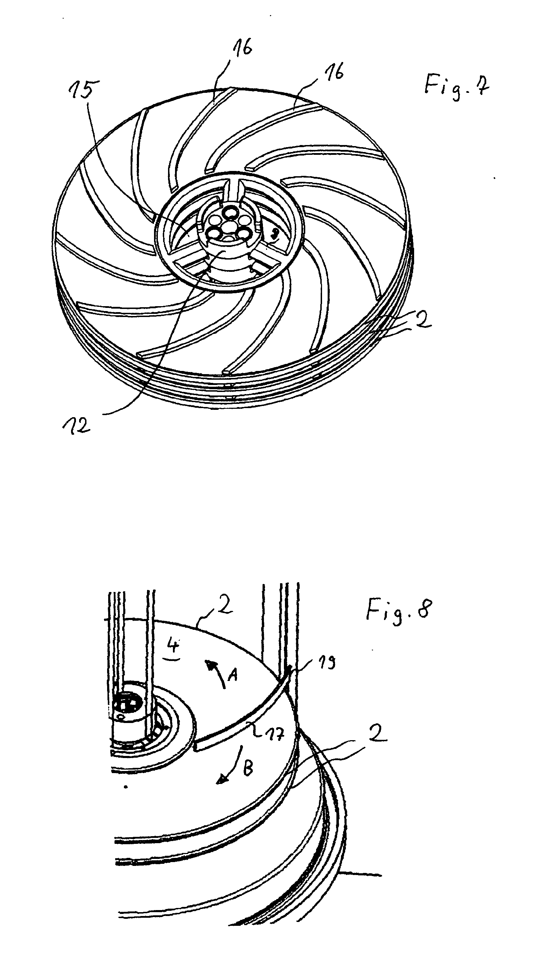

Diese Pumpwirkung kann noch dadurch verstärkt werden, dass auf den Filterplatten 2 einseitig Schaufeln 16 angebracht sind, die sich, wie bei Kreiselpumpenrädern üblich, vom Innenring 6 bis zum Außenring 5 erstrecken und dabei einen radialen/tangentialen Verlauf haben, wie dies beispielhaft in Fig. 7 dargestellt ist. Die Schaufeln 16 weisen eine konstante Schaufelbreite auf und erstrecken sich senkrecht von der Flachseite der Filterscheiben 4. Sie können so ausgebildet sein, dass die Schaufeln 16 einer Filterplatte 2 an der im Filterplattenstapel benachbarten Filterplatte 2 anliegen, so dass sich quasi geschlossene Kreiselräder bilden, welche bei Rotation eine gute Pumpwirkung erzeugen, was nicht nur die Umwälzung der Flüssigkeit innerhalb der Filtervorrichtung fördert, sondern auch die Filtereffizienz, da nahe dem Außenumfang der Filterplatten 2 ein erhöhter Druck ansteht, welcher den Filtervorgang forciert.

Um ggf. die Filterplatten 2 auch mechanisch von anhaftender Masse zu befreien, können innerhalb der Filtervorrichtung Abstreifelemente 17 vorgesehen sein, wie sie beispielhaft anhand von Fig. 8 dargestellt sind. Diese Abstreifelemente 17 sind ähnlich wie die Schaufeln 16 ausgebildet und sind vorteilhaft entweder ortsfest am Gestell 18 oder aber an einer senkrecht zur Filterscheibe 4 sich von dieser erhebenden Achse gelagert. Bei der Darstellung gemäß Fig. 8 erfolgt die Lagerung am Gestell 18, und zwar schwenkbar um eine Achse 19, welche parallel zur Drehachse des Filterplattenstapels ist. Wenn der Filterplattenstapel in Richtung A rotiert, wird das Abstreifelement in die in Fig. 8 dargestellte aktive Stellung geschwenkt, in der es die gesamte Fläche der ringförmigen Filterscheibe 4 bei Drehung der Filterplatte 2 überstreicht und den darauf haftenden Belag abstreift. Bei Drehung in Gegenrichtung, also in Richtung B wird das Abstreifelement um die Achse 19 nach außen in eine inaktive Stellung geschwenkt. Es kann also je nach Drehrichtung des Filterplattenstapels das Abstreifelement 17 aktiviert oder deaktiviert werden. Ein solches Abstreifelement 17 ist jeweils zwischen gegenüberliegenden Filterscheiben 4 benachbarter Filterplatten 2 über den gesamten Filterplattenstapel 1 angeordnet.

Ein aus Filterplatten 2 aufgebauter Filterplattenstapel 1 ist in der in Fig. 9 schematisch dargestellten Filtervorrichtung dargestellt. Der aus einer Vielzahl von Filterplatten 2 aufgebaute Filterplattenstapel 1 ist drehbar innerhalb eines im Wesentlichen zylindrischen Gehäuses 20 gelagert und mittels eines in Fig. 9 nicht dargestellten stirnseitig außerhalb des Gehäuses 20 angeordneten Antriebs rotierbar. Das Gehäuse 20 ist hier als geschlossenes Gehäuse ausgebildet und weist einen Einlass 21 für die zu reinigende Flüssigkeit sowie einen Auslass 22 zur Abfuhr der beim Filtervorgang verbleibenden Filtermasse, welche von der das Gehäuse 20 durchströmenden Flüssigkeit mitgeführt wird, auf. Das Filtrat wird durch den Kanal 14 in der Welle abgezogen, welche durch die Anschlussbauteile 12 der Filterplatten 2 gebildet ist. Innerhalb des Filtergehäuses 2 stellt sich bei Rotation des Filterplattenstapels 1 in Drehrichtung B eine Strömung ein, wie sie durch die unterbrochenen Linien 23 schematisch dargestellt ist. Die durch den Einlass 21 in das Gehäuse 20 eintretende zu filternde Flüssigkeit wird durch die Pumpwirkung des rotierenden Filterplattenstapels 1 in den saugmundähnlichen Bereich der Filterplatten 21 angesaugt und dann im Wesentlichen radial nach außen gefördert, wobei dabei das Filtrat in die Filterplatten 20 eindringt und den über zentralen Kanal 14 abgeführt wird, wohingegen die verbleibende mit Schwebstoffen angereicherte Flüssigkeit entsprechend der vereinfachten dargestellten Strömung 23 die Filtervorrichtung durchläuft und, je nach Druckverhältnissen, entweder innerhalb des Gehäuses im Kreislauf geführt wird oder aber ganz oder teilweise über den Auslass 22 aus dem Gehäuse abgeführt wird.

### Bezugszeichenliste

- 1 -: Filterplattenstapel
- 2 -: Filterplatten
- 3 -: Zentrales Bauteil
- 4 -: Filterscheiben
- 5 -: Außenring
- 6 -: Innenring
- 7 -: Tragrippen
- 8 -: Leitungsführende Rippen
- 9 -: Rücksprünge
- 10 -: Kanäle
- 11 -: Kanalmündungen
- 12 -: Anschlussbauteil
- 13 -: Mitnehmer
- 14 -: Kanäle in 12
- 15 -: Durchbrechung
- 16 -: Schaufeln
- 17 -: Abstreifelemente
- 18 -: Gestell
- 19 -: Achse
- 20: Gehäuse
- 21: Einlass
- 22: Auslass
- 23: Strömung

- A -: Drehrichtung
- B -: Drehrichtung

## Patentansprüche

1. Filtervorrichtung mit einem in einem Gehäuse rotierbar angeordneten Filterplattenstapel (1), bei der die gefilterte Flüssigkeit nach Durchströmen der Filterplatten (2) zentral abgeführt wird, **dadurch gekennzeichnet, dass** die Zufuhr der ungefilterten Flüssigkeit ebenfalls zentral erfolgt.

2. Filtervorrichtung nach Anspruch 1, **dadurch gekennzeichnet, dass** die Zufuhr der ungefilterten Flüssigkeit zentral durch den Filterplattenstapel (1) hindurch erfolgt.

3. Filtervorrichtung nach einem der vorhergehenden Ansprüche, **dadurch gekennzeichnet, dass** der Filterplattenstapel (1) mit einer Drehzahl angetrieben ist, welche am Außenumfang eine Relativgeschwindigkeit zum Gehäuse von mindestens 3m/s bewirkt.

4. Filtervorrichtung nach einem der vorhergehenden Ansprüche, **dadurch gekennzeichnet, dass** der Filterplattenstapel (1) aus mehreren mit Abstand nebeneinander angeordneten und rotierend angetriebenen Filterplatten (2) aufgebaut ist, die jeweils eine mindestens abschnittsweise fluiddurchlässige Schicht (4) aufweisen und deren Inneres mit mindestens einem Anschluss (14) zur Fluidab- und/oder -zufuhr fluidleitend verbunden ist, wobei die Filterplatten (2) jeweils mindestens eine diese durchsetzende Ausnehmung (15) zur Fluidzufuhr aufweisen, die benachbart zum Anschluss (14) angeordnet und fluidisch von diesem getrennt ist.

5. Filtervorrichtung nach einem der vorhergehenden Ansprüche, **dadurch gekennzeichnet, dass** das Innere der Filterplatten (2) Anschlüsse (11) zur Abfuhr der gereinigten Flüssigkeit und zur Zufuhr mindestens eines Fluids aufweist.

6. Filtervorrichtung nach einem der vorhergehenden Ansprüche, **dadurch gekennzeichnet, dass** die Filterplatten (2) jeweils mindestens eine elektrisch leitende Schicht aufweisen und dass Mittel zum Anlegen einer elektrischen Spannung zwischen benachbarten Filterplatten oder zwischen zwei Seiten derselben Filterplatte (2) oder zwischen einer Seite einer Filterplatte (2) und einem externen Potential vorgesehen sind.

7. Filtervorrichtung nach einem der vorhergehenden Ansprüche, **dadurch gekennzeichnet, dass** zwischen benachbarten Filterplatten (2) Abstreifelemente (17) angeordnet sind, welche gegenüberliegende Filterflächen (4) beaufschlagen.

8. Filtervorrichtung nach einem der vorhergehenden Ansprüche, **dadurch gekennzeichnet, dass** die Filterplatten (2) des rotierbar angetriebenen Plattenstapels (1) zur Erzeugung einer Kreiselpumpwirkung ausgebildet und angeordnet sind und dass zwischen benachbarten Filterplatten (2) des rotierbar antreibbaren Plattenstapels (1) eine Leiteinrichtung vorgesehen ist, die die Druckseite einer Filterplatte (2) mit der Saugseite der in Strömungsrichtung dahinter angeordneten Filterplatte (2) verbindet.

9. Filtervorrichtung nach einem der vorhergehenden Ansprüche, **dadurch gekennzeichnet, dass** die Leiteinrichtung mindestens zwei in dem Gehäuse feststehend angeordnete Platten aufweist, von denen die in Strömungsrichtung gesehenen erste Platte einen wellenfernen Strömungskanal und die Strömungsrichtung gesehen zweite Platte einen wellennahen Strömungskanal aufweist oder bildet.

10. Filtervorrichtung nach einem der vorhergehenden Ansprüche, **dadurch gekennzeichnet, dass** eine oder beide feststehende Platten Filteranordnungen aufweisen, die vorzugsweise mit einen außenseitig der Platten angeordneten Abfuhrkanal leitungsverbunden sind.

11. Filtervorrichtung nach einem der vorhergehenden Ansprüche, **dadurch gekennzeichnet, dass** eine feststehende Platte, vorzugsweise alle feststehenden Platten durch hohle Filterplatten (4) gebildet sind.

12. Filtervorrichtung nach einem der vorhergehenden Ansprüche, **dadurch gekennzeichnet, dass** innerhalb des rotierbar angeordneten Plattenstapels (1) Heizelemente angeordnet sind.

13. Filterplatte für eine Filtervorrichtung nach einem der vorhergehenden Ansprüche, **dadurch gekennzeichnet, dass** sie mindestens eine abschnittsweise fluiddurchlässige Schicht (4) aufweist, wobei das Innere der Filterplatte (2) mit mindestens einem zentralen Anschluss (14) fluidleitend verbunden ist und benachbart zum zentralen Anschluss (14) mindestens eine die Filterplatte (2) durchsetzende Ausnehmung (15) vorgesehen ist, die mit dem Inneren der Filterplatte (2) nicht leitungsverbunden ist.

14. Filterplatte nach Anspruch 13, **dadurch gekennzeichnet, dass** die mindestens eine Ausnehmung (15) konzentrisch zur zentralen Öffnung (14) angeordnet ist.

15. Filterplatte nach einem der vorhergehenden Ansprüche, **dadurch gekennzeichnet, dass** innerhalb der Filterplatte (15) Kanäle (10) vorgesehen sind, die jeweils mit mindestens einem Anschluss (11) leitungsverbunden sind und die mit unterschiedlichem radialen Abstand enden.

16. Filterplatte nach einem der vorhergehenden Ansprüche, **dadurch gekennzeichnet, dass** die zentrale Öffnung durch ein im wesentlichen hohlzylindrisches Bauteil (12) gebildet ist, das über mindestens eine kanalbildende und darin mündende Speiche (8) mit dem Inneren der Filterplatte (2) fluidleitend verbunden ist.

17. Filterplatte nach einem der vorhergehenden Ansprüche, **dadurch gekennzeichnet, dass** das hohlzylindrische Bauteil (12) mit Formschlussmitteln (13) zur Übertragung von Drehkräften versehen ist.

18. Filterplatte nach einem der vorhergehenden Ansprüche, **dadurch gekennzeichnet, dass** an einer Flachseite der Filterplatte (2) Schaufeln (16) angeordnet sind, welche sich vorzugsweise von einem inneren Durchmesser (6) zu einem äußeren Durchmesser (5) radial und tangential zur Mittelachse der Filterplatte (2) erstrecken.

19. Filterplatte nach einem der vorhergehenden Ansprüche, **dadurch gekennzeichnet, dass** sich die Schaufeln (16) mit ihren Flachseiten normal zur Flachseite der Filterplatte (2) erstrecken.

20. Filterplatte nach einem der vorhergehenden Ansprüche, **dadurch gekennzeichnet, dass** die Schaufeln (16) über ihre gesamte Länge eine konstante Breite aufweisen.

21. Filterplatte nach einem der vorhergehenden Ansprüche, **dadurch gekennzeichnet, dass** sie zu mehreren konzentrisch nebeneinander liegenden Platten (2) in einem Filtergehäuse angeordnet ist, wobei die hohlzylindrischen Bauteile (12) eine Welle zur Rotation des Filterplattenstapels sowie einen zentralen Kanal (14) zur Abfuhr von insbesondere gefiltertem Fluid bilden.

22. Filterplatte nach einem der vorhergehenden Ansprüche, **dadurch gekennzeichnet, dass** die hohlzylindrischen Bauteile (12) an ihrer Innenseite mit Elementen zum Zentrieren auf einer Welle vorgesehen sind.

23. Filterplatte nach einem der vorhergehenden Ansprüche, **dadurch gekennzeichnet, dass** an mindestens einer Flachseite des Platte (2) ein Abstreifelement (17) vorgesehen ist, welches mit der Plattenoberfläche in Wirkverbindung steht.

24. Filterplatte nach einem der vorhergehenden Ansprüche, **dadurch gekennzeichnet, dass** das Abstreifelement (17) so ausgebildet und angeordnet ist, dass es in einer ersten Drehrichtung (A) der Platte (2), vorzugsweise der Drehrichtung des normalen Filterbetriebs, wirksam und in einer zweiten Drehrichtung (B) der Platte (2) unwirksam ist.

25. Filterplatte nach einem der vorhergehenden Ansprüche, **dadurch gekennzeichnet, dass** das Abstreifelement (17) an der Flachseite der Platte (2) angelenkt ist, derart, dass es um eine Achse parallel zur Drehachse der Platte schwenkbar ist.

26. Filterplatte nach einem der vorhergehenden Ansprüche, **dadurch gekennzeichnet, dass** eine vorbestimmte Unwucht vorgesehen ist, die in einem vorbestimmten Drehzahlbereich radiale und/oder α-xiale Schwingen der Filteroberfläche hervorruft.

27. Filterplatte nach einem der vorhergehenden Ansprüche, **dadurch gekennzeichnet, dass** mindestens die außenliegenden Flachseiten (4) mit verschleißmindernden Schicht versehen sind.

28. Filterplatte nach einem der vorhergehenden Ansprüche, **dadurch gekennzeichnet, dass** eine elektrisch leitende Schicht vorgesehen ist.

29. Filterplatte nach einem der vorhergehenden Ansprüche, **dadurch gekennzeichnet, dass** eine biologisches Wachstum fördernde Schicht vorgesehen ist.
